# EUROPEAN PATENT APPLICATION

(11) **EP 4 814 044 A1**
(43) Date of publication of application: **30.09.2026**
(21) Application number: 24894284.9
(22) Date of filing: 01.07.2024
(51) Int. Cl.: C08J 7/04, C08J 7/054, C09D 183/04, C09D 5/16

(54) **HYDROPHILIC PHOTO-CURABLE POLYMER STRUCTURE HAVING SLIPPERY SURFACE**

(30) Priority: 24.11.2023 KR 20230165435; 27.11.2023 KR 20230166932
(71) Applicant: Changwon National University Industry Academy Cooperation Corps, Changwon-si, Gyeongsangnam-do 51140 (KR)
(72) Inventor: CHO, Young Tae, Changwon-si, Gyeongsangnam-do 51427 (KR); KIM, Seok, Changwon-si, Gyeongsangnam-do 51140 (KR); KIM, Woo Young, Changwon-si, Gyeongsangnam-do 51371 (KR); LEE, Sang Hoon, Changwon-si, Gyeongsangnam-do 51153 (KR)
(74) Representative: Gulde & Partner
(86) International application number: PCT/KR2024/009170
(87) International publication number: WO 2025/110387

(57) **Abstract**

The present invention relates to a hydrophilic photo-curable polymer structure having a slippery surface and, more specifically, to a hydrophilic photo-curable polymer structure having a slippery surface, in which a low-viscosity silicone lubricating material is loaded on the surface of porous nanopores by mimicking the surface structure of a Nepenthes pitcher plant, thereby realizing a low-adhesion slippery surface.

## Description

### TECHNICAL FIELD

The present invention relates to a hydrophilic photo-curable polymer structure having a slippery surface, and more particularly, to a hydrophilic photo-curable polymer structure having a slippery surface that mimics the surface structure of a tropical pitcher plant to implement a low-adhesion slippery surface by loading a low-viscosity silicone lubricating material onto a porous nanopore surface.

### BACKGROUND ART

Controlling the adhesion and transport of substances that are present in various states is a critically important factor in many fields including medicine, engineering, and energy industry. For example, in medical materials, methods including chemical surface treatment and mimicry of fine surface structures, such as cicada wings, are employed to avoid and control infection by infectious pathogens such as novel coronavirus (COVID-19) and antibiotic-resistant bacteria. In addition, performing surface treatment or controlling surface structures to prevent ice adhesion in the aviation and energy sectors is also one of the important issues.

Research related to controlling the adhesion and transport of substances through interactions with various surfaces and materials as described above has a great impact in many fields, and accordingly, the importance of research on this topic has increased significantly.

Nature has already evolved highly sophisticated surface functions and structures for survival. Mimicking this wisdom of nature, various functional surface engineering technologies are being rapidly developed.

A digital light processing (DLP) 3D printer is a type of 3D printer that projects a mask onto a photo-curable resin using high-resolution projection light to form a model, creating high-precision stacked layer surfaces on a layer basis. The DLP3D printer is constructed with a transparent resin tank at the bottom and a build platform that descends into the resin tank, fabricating parts by stacking layers upside-down one at a time.

When separating an object fabricated by the DLP 3D printer from a tray, the releasability of the tray is poor, making separation difficult, and thus release agents such as silicone or film have been conventionally applied by coating

However, when a release agent is applied as described above, the release agent is frequently torn off by the cured resin, potentially causing damage during the printing process. Moreover, with repeated use, the coating layer is gradually contaminated by the release agent, which may degrade the quality of the fabricated product.

Due to the above-described problems, there is a need for a polymer structure having a slippery surface and a method for preparing the same, capable of allowing the fabricated object to be easily separated from the tray without causing damage or contamination to the object.

### DETAILED DESCRIPTION OF THE INVENTION

### TECHNICAL PROBLEM

In order to solve the above-described problems, an object of the present invention is to provide a hydrophilic photo-curable polymer structure having a slippery surface that allows a fabricated object to be easily separated from a tray without causing damage or contamination to the object.

Another object of the present invention is to provide a hydrophilic photo-curable polymer structure having a slippery surface, in which a low-viscosity silicone lubricating material is loaded onto a porous nanopore surface that mimics the surface structure of a tropical pitcher plant, thereby implementing a low-adhesion slippery surface through light-based surface treatment.

The technical problems to be solved by the present invention are not limited to the above-mentioned technical problems, and other technical problems that are not mentioned will be clearly understood by those skilled in the art from the description of the present invention.

### TECHNICAL SOLUTION

To achieve the above-described objects, the present invention provides a hydrophilic photo-curable polymer structure having a slippery surface, including: a functionalized porous nanopore surface layer in which -OH groups are formed; a functionalized silane water-repellent coating layer in which -OH groups are formed; and a low-viscosity silicone lubricating coating layer having a viscosity of 5 to 15 cS, wherein the structure is fixed by light irradiation.

In the present invention, the functionalized porous nanopore surface layer includes a porous polymer obtained by photo-curing a mixture of a hydrophilic photo-curable polymer and a water-soluble polymer and then immersing the resulting mixture in water to remove the water-soluble polymer.

In the present invention, the mixture of the hydrophilic photo-curable polymer and the water-soluble polymer is a mixture of the hydrophilic photo-curable polymer and the water-soluble polymer at a weight ratio of 1:0.5 to 1.5.

In the present invention, the photo-curing is UV photo-curing using light having a wavelength of 320 to 400 nm.

In the present invention, the functionalized porous nanopore surface layer has a pore size of 0.1 to 60 nm.

In the present invention, the functionalized porous nanopore surface layer has an average pore size of 11 to 18 nm.

In the present invention, the functionalized porous nanopore surface layer has a porosity of 40% to 60% based on 100% of the surface layer area.

In the present invention, the functionalized porous nanopore surface layer has a surface functionalized by light treatment.

In the present invention, the light treatment is UV cleaning (UV ozone) treatment.

In the present invention, the light treatment is performed for 5 to 20 minutes.

In the present invention, the functionalized silane water-repellent coating layer includes silane-based nanoparticles.

In the present invention, the silane-based nanoparticles are at least one selected from the group consisting of octadecyltrichloro silane (OTS), amino silane, vinyl silane, epoxy silane, methacryloxy silane, sulfide silane, ureide silane, alkyl silane, phenyl silane, oxime silane, isocyanato silane, fluoro silane, bis(trimethylsilyl)amine (hexamethyldisilazane (HMDZ)), alkyl silane, and amino silane.

In the present invention, the functionalized silane water-repellent coating layer has a surface functionalized by light treatment.

In the present invention, the light treatment is UV cleaning (UV ozone) treatment.

In the present invention, the light treatment is performed for 5 to 20 minutes.

In the present invention, the low-viscosity silicone lubricating coating layer has a surface tension of 18 to 23 mN/m.

In the present invention, the light irradiation is UV grafting.

In the present invention, the light irradiation is irradiation with ultraviolet (UV) light having a wavelength of 320 to 400 nm at a dose of 5,000 to 14,000 mJ/cm².

In the present invention, the polymer structure has a surface exhibiting a water contact angle of 80 to 100°, a water sliding angle of 0.4 to 1.2°, and an oil contact angle of 21 to 32°.

### ADVANTAGEOUS EFFECTS

By means of the solution to the above-described problems, the present invention can provide a hydrophilic photo-curable polymer structure having a slippery surface that allows a fabricated object to be easily separated from a tray without causing damage or contamination to the object.

In addition, the present invention can provide a hydrophilic photo-curable polymer structure having a slippery surface in which a low-viscosity silicone lubricating material is loaded onto a porous nanopore surface that mimics the surface structure of a tropical pitcher plant, and a low-adhesion slippery surface is implemented through light-based surface treatment.

In addition, the present invention can provide a hydrophilic photo-curable polymer structure having a slippery surface capable of implementing a slippery low-adhesion surface through a simple surface treatment using light.

In addition, the present invention can provide a hydrophilic photo-curable polymer structure having a slippery surface that can be applied as a self-cleaning surface by utilizing the slippery surface properties.

In addition, the present invention can provide a hydrophilic photo-curable polymer structure having a slippery surface that can be utilized as a waterproof, antifouling, and anti-icing material, as well as a display material.

The effects of the present invention are not limited to the above-mentioned effects, and other effects that are not mentioned will be clearly understood by those skilled in the art from the description of the claims.

### DESCRIPTION OF THE DRAWINGS

FIG. 1 shows the preparation process of a hydrophilic photo-curable polymer structure having a slippery surface according to the present invention.
FIG. 2 shows scanning electron microscope (SEM) observation results of the polymer depending on the mixing ratio of the photo-curable polymer and a water-soluble polymer according to the present invention.
FIG. 3 shows showing the size and number of pores of the polymer depending on the mixing ratio of the photo-curable polymer and the water-soluble polymer according to the present invention.
FIG. 4 shows the water contact angle measurement results of the surface at each preparation step of the hydrophilic photo-curable polymer structure having the slippery surface according to the present invention.
FIG. 5 shows (a) the contact angle for various droplets and (b) the sliding angle for various droplets of the hydrophilic photo-curable polymer structure having the slippery surface according to the present invention.
FIG. 6 shows (a) the state of a droplet in contact with the surface, (b) the surface after the droplet has evaporated, (c) the contact radius over time, and (d) the contact angle over time for a polymer structure without pores formed therein according to the present invention.
FIG. 7 shows (a) the state of a droplet in contact with the surface, (b) the surface after the droplet has evaporated, (c) the contact radius over time, and (d) the contact angle over time for a porous polymer structure according to the present invention.
FIG. 8 shows (a) the state of a droplet in contact with the surface, (b) the surface after the droplet has evaporated, (c) the contact radius over time, and (d) the contact angle over time for the hydrophilic photo-curable polymer structure having a slippery surface according to the present invention.
FIG. 9 shows (a) a 3D printer using the hydrophilic photo-curable polymer having the slippery surface according to the present invention, and (b) an object fabricated using the 3D printer.
FIG. 10 shows (a) the transmittance as a function of wavelength for polymer structures prepared in examples and comparative examples according to the present invention, and (b) the hydrophilic photo-curable polymer structure having the slippery surface.
FIG. 11 shows an anti-icing test apparatus according to the present invention.
FIG. 12 shows SEM observation results of the polymer structures prepared in examples and comparative examples according to the present invention.
FIG. 13 shows (a) adhesion force over time and (b) force per unit area of the polymer structures prepared in examples and comparative examples according to the present invention.

### MODES OF THE INVENTION

The terms used herein are selected as general terms that are currently widely used as much as possible while considering the functions in the present invention, but they may vary depending on the intention of those of ordinary skill in the art, precedents, the emergence of new technology, or the like. In addition, in certain cases, there are terms arbitrarily selected by the applicant, and in this case, the meaning will be described in the corresponding part of the detailed description of the invention. Therefore, the terms used in the present invention should be defined based on the meaning of the terms and the overall content of the present invention, rather than simply the names of the terms.

Unless otherwise defined, all terms, including technical and scientific terms used herein, have the same meaning as generally understood by one of ordinary skill in the art to which the present invention pertains. Terms, such as those defined in commonly used dictionaries, should be interpreted as having a meaning that is consistent with their meaning in the context of the relevant art and are not interpreted in an idealized or overly formal sense unless explicitly defined in the present invention.

Numerical ranges are inclusive of the values defined therein. Every maximum numerical limitation given throughout the present specification includes every lower numerical limitation, as if such lower numerical limitations were expressly written. Every minimum numerical limitation given throughout the present specification includes every higher numerical limitation, as if such higher numerical limitations were expressly written. Every numerical limitation given throughout the present specification will include every better numerical range within the broader numerical range, as if the narrower numerical limitations were expressly written.

### Hydrophilic photo-curable polymer structure having a slippery surface

The present invention relates to a hydrophilic photo-curable polymer structure having a slippery surface.

The present invention relates to a hydrophilic photo-curable polymer structure having a slippery surface, including: a functionalized porous nanopore surface layer; a functionalized silane water-repellent coating layer; and a low-viscosity silicone lubricating coating layer, wherein the structure is fixed by light irradiation.

The hydrophilic photo-curable polymer structure having the slippery surface may include a porous nanopore surface that effectively retains a relatively large amount of a low-viscosity silicone lubricating material compared to a flat surface.

In the present invention, the functionalized porous nanopore surface layer may include a porous polymer obtained by photo-curing a mixture of a hydrophilic photo-curable polymer and a water-soluble polymer and then immersing the resulting mixture in water to remove the water-soluble polymer.

In the present invention, the mixture of the hydrophilic photo-curable polymer and the water-soluble polymer may be a mixture in which the hydrophilic photo-curable polymer and the water-soluble polymer are mixed at a weight ratio of 1:0.5 to 1.5, and preferably at a weight ratio of 1:1.

When mixed at the above-described weight ratio, a structure with a high density of nanopores capable of retaining the greatest amount of the low-viscosity silicone lubricating material may be formed. When the hydrophilic photo-curable polymer and the water-soluble polymer are mixed at a weight ratio of 1:0.5, a problem of reduced polymer durability due to an excessive number of pores may occur, and when mixed at a weight ratio of 1:1.5, sufficient pores may not be formed, making it impossible to include the low-viscosity silicone lubricating material, and thus the slippery properties may not be exhibited.

In the present invention, the photo-curing may be UV photo-curing.

In the present invention, the photo-curing may be curing using light having a wavelength of 320 to 400 nm.

In the present invention, the functionalized porous nanopore surface layer may have a pore size of 0.1 to 60 nm. When the pore size is less than 0.1 nm, the low-viscosity silicone lubricating material may not be introduced into the pores, and when the pore size exceeds 60 nm, the durability of the polymer structure may be reduced.

In the present invention, the functionalized porous nanopore surface layer may have an average pore size of 11 to 18 nm.

In the present invention, the functionalized porous nanopore surface layer may have a porosity of 40% to 60% based on 100% of the surface layer area. When the porosity is less than 40%, the amount of the low-viscosity silicone lubricating material contained in the polymer structure may not be sufficient, and slippery surface performance may not be exhibited. When the porosity exceeds 60%, the durability of the polymer structure may be reduced.

In the present invention, the functionalized porous nanopore surface layer may have a surface functionalized by light treatment. The functionalization may be water-repellent coating to prevent the nanopore surface from becoming hydrophilic, which would cause the water droplets to pin and fail to slide.

In the present invention, the light treatment may be UV cleaning (UV ozone) treatment. The UV cleaning treatment may be a pre-treatment step for surface functionalization prior to water-repellent coating. Through the UV cleaning treatment, chemical bonding with silane nanoparticles may be induced to form -OH groups.

In the present invention, the light treatment may be performed for 5 to 20 minutes. When the light treatment is performed for less than 5 minutes, -OH groups may not be formed on the surface layer, and when performed for more than 20 minutes, the shape of the surface may be deformed due to the intense heat and light energy.

In the present invention, the functionalized porous nanopore surface layer may have -OH groups formed thereon.

In the present invention, the functionalized silane water-repellent coating layer may include silane-based nanoparticles.

The silane water-repellent coating layer may be formed by applying a liquid silane-based nanoparticle solution in a beaker, placing a specimen on an upper portion of the beaker, and evaporating the solution for 40 to 60 minutes in a temperature environment of 100 to 120 °C to apply the nanoparticles onto the surface.

In the present invention, the silane-based nanoparticles may be at least one selected from the group consisting of octadecyltrichloro silane (OTS), amino silane, vinyl silane, epoxy silane, methacryloxy silane, sulfide silane, ureide silane, alkyl silane, phenyl silane, oxime silane, isocyanato silane, fluoro silane, bis(trimethylsilyl)amine (hexamethyldisilazane (HMDZ)), alkyl silane, and amino silane, but is not limited thereto.

In the present invention, the functionalized silane water-repellent coating layer may have a surface functionalized by light treatment.

The functionalization may be a secondary functionalization treatment on the water-repellent coated surface to form -OH groups for chemical bonding with the low-viscosity silicone lubricating material to be subsequently applied.

In the present invention, the light treatment may be UV cleaning (UV ozone) treatment.

In the present invention, the light treatment may be performed for 5 to 20 minutes. When the light treatment is performed for less than 5 minutes, -OH groups may not be formed on the surface layer, and when performed for more than 20 minutes, the shape of the surface may be deformed due to the intense heat and light energy.

In the present invention, the functionalized silane water-repellent coating layer may have -OH groups formed thereon.

In the present invention, the low-viscosity silicone lubricating coating layer may include a low-viscosity silicone lubricating material having a viscosity of 5 to 15 cS. When the viscosity exceeds 15 cS, the slippery surface properties may not be implemented due to the high viscosity, and when the viscosity is less than 5 cS, the viscosity may not be exhibited, and thus the slippery surface properties exhibiting effects such as a low sliding angle for water and droplet coalescence may not be implemented.

In the present invention, the low-viscosity silicone lubricating coating layer may have a surface tension of 18 to 23 mN/m.

In the present invention, the light irradiation may be UV grafting. Through the UV grafting light irradiation, the porous surface layer and the low-viscosity silicone lubricating coating layer may be chemically bonded to form a polymer brush on the porous surface layer. The polymer brush formed in this manner may result in excellent slipperiness and, consequently, coalescence of droplets.

In the present invention, the light irradiation may be irradiation with UV light at a dose of 5,000 to 14,000 mJ/cm². When the UV is applied at a dose of less than 5,000 mJ/cm², -OH groups for forming a polymer brush may not be formed on the surface layer, and when applied at a dose exceeding 14,000 mJ/cm², the shape of the surface layer may be deformed due to the intense heat and light energy.

In the present invention, the light irradiation may be irradiation with light having a wavelength of 320 to 400 nm at a dose of 5,000 to 14,000 mJ/cm².

In the present invention, the surface of the polymer structure may exhibit a water contact angle of 80 to 100°.

In the present invention, the surface of the polymer structure may exhibit a water sliding angle of 0.4 to 1.2°.

In the present invention, the surface of the polymer structure may exhibit an oil contact angle of 21 to 32°. The polymer structure may exhibit high contact angles and sliding angles for various droplets including milk, FC oil, olive oil, and honey.

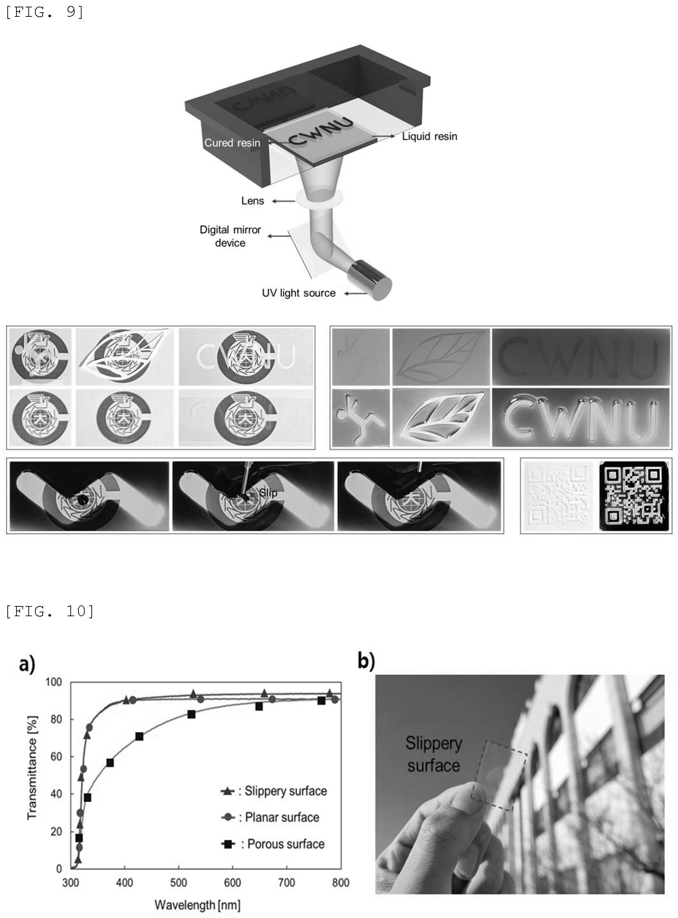

Since the hydrophilic photo-curable polymer structure having the slippery surface includes a photo-curable material, digital patterning may be possible as shown in FIG. 9. The digitally patterned polymer structure may exhibit a liquid pattern due to the selective non-wetting property of the surface. As described above, any desired shape may be formed, and flow control of droplets may be possible.

The present invention relates to a release film for 3D printing, including the hydrophilic photo-curable polymer structure having the slippery surface.

In the present invention, the 3D printing may be digital light processing (DLP) printing.

The present invention relates to a waterproof, antifouling, and anti-icing material including the hydrophilic photo-curable polymer structure having the slippery surface. The waterproof, antifouling, and anti-icing material may exhibit properties in which even ice formed on the surface slides easily. The material may be applicable as an anti-icing surface in extreme environments.

The present invention relates to a display material including the hydrophilic photo-curable polymer structure having the slippery surface.

The polymer structure may be applicable to channel structures required for drug delivery and QR codes exposed to external environments utilizing self-cleaning properties.

### Method for preparing a hydrophilic photo-curable polymer structure having a slippery surface

The present invention relates to a method for preparing a hydrophilic photo-curable polymer structure having a slippery surface.

The present invention relates to a method for preparing a hydrophilic photo-curable polymer structure having a slippery surface, including: preparing a porous nanopore surface layer; functionalizing the porous nanopore surface layer; forming a silane water-repellent coating layer; functionalizing the silane water-repellent coating layer; forming a low-viscosity silicone lubricating coating layer; and performing light irradiation.

The method for preparing the hydrophilic photo-curable polymer structure having the slippery surface may include preparing a porous nanopore surface that effectively retains a relatively large amount of a low-viscosity silicone lubricating material compared to a flat surface.

In the present invention, the step of preparing the porous nanopore surface layer may include: mixing a hydrophilic photo-curable polymer and a water-soluble polymer; applying the resulting mixture onto a substrate; photo-curing the mixture applied onto the substrate; and immersing the cured mixture in water to remove the water-soluble polymer.

In the present invention, the step of mixing the hydrophilic photo-curable polymer and the water-soluble polymer may include mixing the hydrophilic photo-curable polymer and the water-soluble polymer at a weight ratio of 1:0.5 to 1.5.

When mixed at the above-described weight ratio, a structure with a high density of nanopores capable of retaining the greatest amount of the low-viscosity silicone lubricating material may be formed. When the hydrophilic photo-curable polymer and the water-soluble polymer are mixed at a weight ratio of 1:0.5, a problem of reduced polymer durability due to an excessive number of pores may occur, and when mixed at a weight ratio of 1:1.5, sufficient pores may not be formed, making it impossible to include the low-viscosity silicone lubricating material, and thus the slippery properties may not be exhibited.

In the present invention, the step of photo-curing may be UV photo-curing.

In the present invention, the step of photo-curing may be curing using light having a wavelength of 320 to 400 nm.

In the present invention, the step of functionalizing the porous nanopore surface layer may include functionalizing the surface through light treatment. The functionalization may be water-repellent coating to prevent the nanopore surface from becoming hydrophilic, which would cause water droplets to pin and fail to slide.

In the present invention, the light treatment may be UV cleaning (UV ozone) treatment. The UV cleaning treatment may be a pre-treatment step for surface functionalization prior to water-repellent coating. Through the UV cleaning treatment, chemical bonding with silane nanoparticles may be induced to form -OH groups.

In the present invention, the light treatment may be performed for 5 to 20 minutes. When the light treatment is performed for less than 5 minutes, -OH groups may not be formed on the surface layer, and when performed for more than 20 minutes, the shape of the surface may be deformed due to the intense heat and light energy.

In the present invention, the step of forming the silane water-repellent coating layer may include: applying a liquid silane-based nanoparticle solution to a glass container; placing a substrate on an upper portion of the glass container; heating the glass container to evaporate the silane-based nanoparticle solution; and obtaining the substrate with the evaporated nanoparticle solution applied on the surface.

In the present invention, the silane-based nanoparticle solution may be at least one selected from the group consisting of octadecyltrichloro silane (OTS), amino silane, vinyl silane, epoxy silane, methacryloxy silane, sulfide silane, ureide silane, alkyl silane, phenyl silane, oxime silane, isocyanato silane, fluoro silane, bis(trimethylsilyl)amine (hexamethyldisilazane (HMDZ)), alkyl silane, and amino silane.

In the present invention, the step of evaporating the silane-based nanoparticle solution may be evaporation at 100 to 120 °C for 40 to 60 minutes.

In the present invention, the step of functionalizing the silane water-repellent coating layer may include functionalizing the surface by light treatment. The functionalization may be a secondary functionalization treatment on the water-repellent coated surface to form -OH groups for chemical bonding with the low-viscosity silicone lubricating material to be subsequently applied.

In the present invention, the light treatment may be UV cleaning (UV ozone) treatment.

In the present invention, the light treatment may be performed for 5 to 20 minutes. When the light treatment is performed for less than 5 minutes, -OH groups may not be formed on the surface layer, and when performed for more than 20 minutes, the shape of the surface may be deformed due to the intense heat and light energy. Through the functionalization, -OH groups may be formed on the silane water-repellent coating layer.

In the present invention, the step of forming the low-viscosity silicone lubricating coating layer may include coating a low-viscosity silicone lubricating material on the functionalized silane water-repellent coating layer.

In the present invention, the low-viscosity silicone lubricating material may have a viscosity of 5 to 15 cS. When the viscosity exceeds 15 cS, the slippery surface properties may not be implemented due to the high viscosity, and when the viscosity is less than 5 cS, the desired lubricity may not be exhibited, and thus the slippery surface properties exhibiting effects such as a low sliding angle for water and droplet coalescence may not be implemented.

In the present invention, the step of applying the low-viscosity silicone lubricating material may be applying the low-viscosity silicone lubricating material in an amount of 10 to 20 µL/cm². When the silicone lubricating material is applied in an amount of less than 10 µL/cm², slippery surface properties may not be implemented, and when applied in an amount exceeding 20 µL/cm², a problem of contaminating the surface of the porous surface layer may occur.

In the present invention, the step of light irradiation may be irradiation by a UV grafting method. Through the UV grafting light irradiation, the porous surface layer and the low-viscosity silicone lubricating coating layer may be chemically bonded to form a polymer brush on the porous surface layer. The polymer brush formed in this manner may result in excellent slipperiness and, consequently, coalescence of droplets.

In the present invention, the step of light irradiation step may be irradiation with UV light at a dose of 5,000 to 14,000 mJ/cm². When the UV irradiation is performed at a dose of less than 5,000 mJ/cm², -OH groups for forming a polymer brush may not be formed on the surface layer, and when the UV irradiation is performed at a dose exceeding 14,000 mJ/cm², the shape of the surface layer may be deformed due to the intense heat and light energy.

In the present invention, the light irradiation step may be irradiation with light having a wavelength of 320 to 400 nm at a dose of 5,000 to 14,000 mJ/cm².

### Examples

Hereinafter, examples of the present invention are described in detail, but it is obvious that the present invention is not limited by the following examples.

The advantages and features of the present invention and methods for achieving them will become apparent with reference to the embodiments described in detail below together with the accompanying drawings. However, the present invention is not limited to the embodiments disclosed below, but may be implemented in various different forms, and the present embodiments are provided only to make the disclosure of the present invention complete and to fully inform those skilled in the art of the scope of the invention, and the present invention is defined only by the scope of the claims.

### <Example 1> Porous polymer structure

Polyethylene glycol (PEG), a water-soluble material, was mixed with a polyurethane acrylate-based photo-curable resin, a photo-curable material, at a weight ratio (% by weight) of 1:1. Thereafter, the resin was cured, immersed in water for one hour, and then dried in an oven at 70 °C for one hour to prepare a polymer structure with nanopores formed therein (Step 1).

### <Example 2> Hydrophilic photo-curable polymer structure having a slippery surface

The polymer structure prepared in Example 1 was irradiated with UV-B light having a wavelength of 184 to 255 nm for 15 minutes to form hydroxyl groups (Step 2).

Thereafter, octadecyltrichloro silane (OTS) was vapor-deposited on a hot plate at a temperature of 120 °C for 40 minutes to form a water-repellent coating layer in which the hydroxyl groups formed on the surface of the polymer structure and the OTS were bonded (Step 3).

UV ozone treatment was performed on the water-repellent coating layer for 20 minutes to form hydroxyl groups once more on the surface (Step 4).

Silicone oil was applied on the coating layer by drop-coating in an amount of 10 µL/cm² (Step 5).

Thereafter, UV-B light having a wavelength of 205 to 340 nm was applied at a dose of 20 mJ/cm² for 15 minutes to induce bonding between the porous surface and the silicone oil, thereby forming a PDMS brush filled with the silicone oil in the surface layer, and thus a hydrophilic photo-curable polymer structure having a slippery surface was prepared (Step 6).

### <Comparative Example 1-1>

Comparative Example 1-1 was prepared in the same manner as Example 1, except that the water-soluble material polyethylene glycol and the polyurethane acrylate-based photo-curable resin were mixed at a weight ratio (% by weight) of 10:1.

### <Comparative Example 1-2>

Comparative Example 1-2 was prepared in the same manner as Example 1, except that the water-soluble material polyethylene glycol and the polyurethane acrylate-based photo-curable resin were mixed at a weight ratio (% by weight) of 2:1.

### <Comparative Example 2>

A conventional polymer structure having a flat surface was prepared.

### <Experimental Example 1> SEM analysis

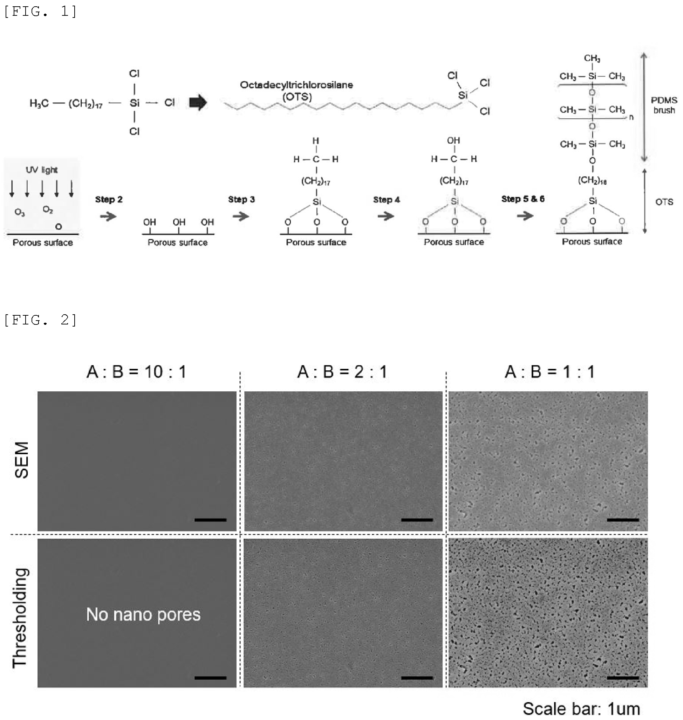

The surfaces of the polymer structures prepared in Example 1 and Comparative Examples 1-1 and 1-2 were analyzed by SEM, and the results are shown in FIG. 2.

As shown in FIG. 2, no nanopores were formed on the surface of the polymer structure prepared by mixing the water-soluble material and the photo-curable resin at a weight ratio of 10:1 in Comparative Example 1-1. Very small nanopores were formed on the surface of the polymer structure prepared by mixing the water-soluble material and the photo-curable resin at a weight ratio of 2:1 in Comparative Example 1-2.

In contrast, large-sized nanopores were formed on the surface of the polymer structure prepared by mixing the water-soluble material and the photo-curable resin of Example 1 at a weight ratio of 1:1, compared to the nanopores formed in Comparative Example 1-2.

The above-described results confirmed that when a polymer structure was prepared by mixing the water-soluble material and the photo-curable resin at a weight ratio of 1:1 according to the conditions limited in the preparation method of the hydrophilic photo-curable polymer structure having the slippery surface according to the present invention, large-sized nanopores were formed at a high density, enabling inclusion of the low-viscosity silicone lubricating material.

### <Experimental Example 2> Measurement of formed nanopores

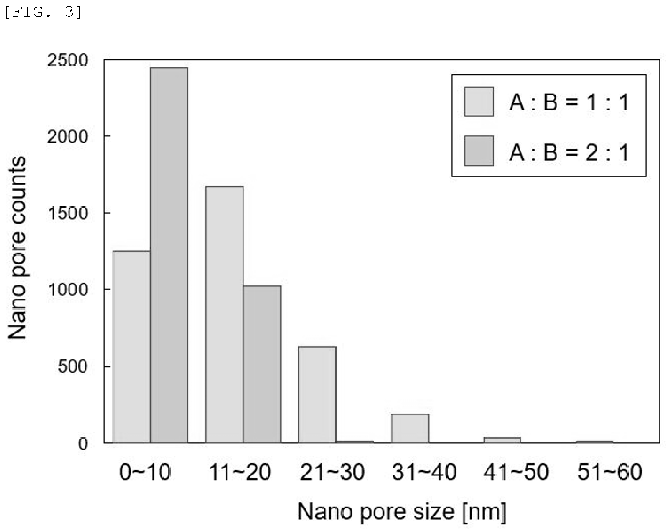

The size and number of nanopores formed on the surfaces of the polymer structures prepared in Example 1 and Comparative Example 1-2 were measured, and the results are shown in FIG. 3.

As shown in FIG. 3, the polymer structure of Comparative Example 1-2 was found to contain mostly nanopores with a size of 0 to 10 nm, and to contain some nanopores with a size of 11 to 20 nm.

On the other hand, the polymer structure of Example 1 was found to contain mostly nanopores with a size of 11 to 20 nm. It was also found to contain relatively fewer nanopores with a size of 0 to 10 nm, and to contain some nanopores with a size of 21 to 60 nm.

The above-described results confirmed that when a polymer structure was prepared by mixing the water-soluble material and the photo-curable resin at a weight ratio of 1:1 according to the conditions limited in the preparation method of the hydrophilic photo-curable polymer structure having the slippery surface according to the present invention, large-sized nanopores were formed at a high density, enabling inclusion of the low-viscosity silicone lubricating material.

### <Experimental Example 3> Measurement of water contact angle of surface at each preparation step

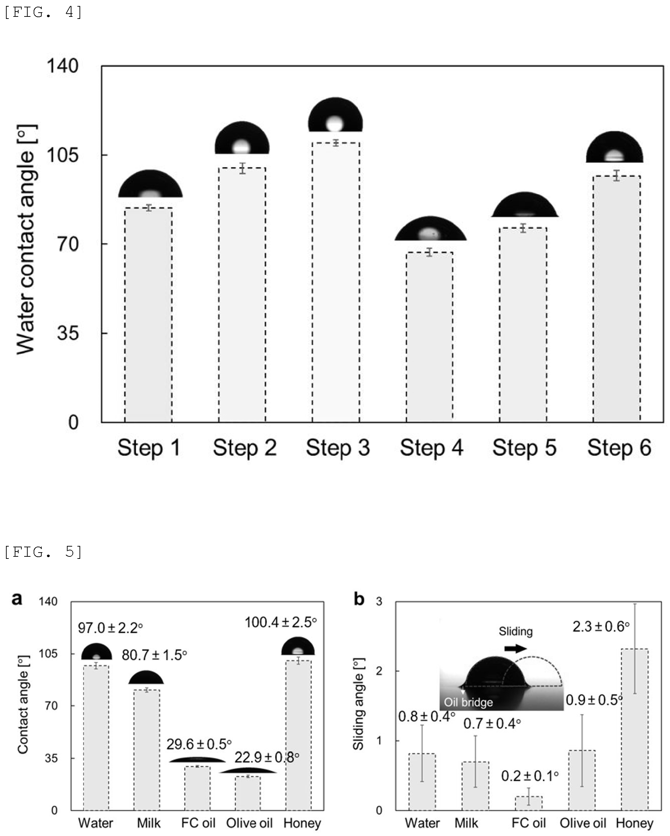

The water contact angle of the surface formed at each preparation step of Example 1 and Example 2 was measured, and the results are shown in FIG. 4.

As shown in FIG. 4, the water contact angle was found to increase from Step 1 of Example 1 until the silane water-repellent coating layer was formed in Step 3 of Example 2. When the water-repellent coating layer was functionalized in Step 4 of Example 2, the water contact angle was found to decrease significantly, but was then found to increase through Step 5 of forming the lubricating coating layer on the water-repellent coating layer and Step 6 of performing light irradiation.

The above-described results confirmed that a slippery surface was formed in the prepared polymer structure only when the preparation is carried out including all steps limited in the method for preparing the hydrophilic photo-curable polymer structure having the slippery surface according to the present invention.

### <Experimental Example 4> Measurement of contact angle and sliding angle for various droplets

Water, milk, FC oil, olive oil, and honey were dropped onto the surface of the polymer structure prepared in Example 2, and the contact angle and sliding angle for each droplet were measured. The results are shown in FIG. 5.

As shown in FIG. 5, it was confirmed that the polymer structure of Example 2 exhibited excellent water repellency with a contact angle of 97.0 ± 2.2° and a sliding angle of 0.8 ± 0.4° for water. In addition, for milk, FC oil, olive oil, and honey, the polymer structure exhibited superior water repellency compared to conventional films, considering the properties of each droplet.

The above-described results confirmed that the hydrophilic photo-curable polymer structure having the slippery surface according to the present invention has low adhesion and slipperiness that exhibit excellent water repellency for various droplets.

### <Experimental Example 5> Analysis of sliding performance

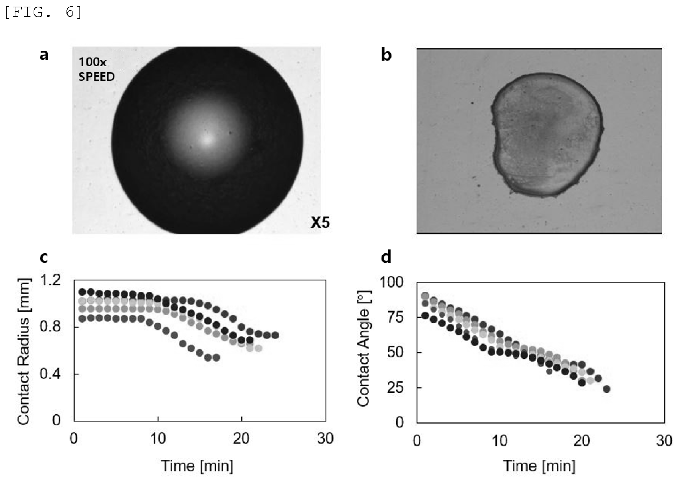

A 2 µL colloidal solution was dropped onto the polymer structures prepared in Comparative Example 2 and Examples 1 and 2, and then evaporated. The contact area and contact angle as a function of time until complete evaporation were repeatedly measured, and the results are shown in FIGS. 6 to 8.

As shown in FIG. 6, the polymer structure of Comparative Example 2 exhibited a contact area of 1.2 to 0.4 mm and a contact angle of 100 to 25° until the solution was completely evaporated, and the solution was found to evaporate without sliding.

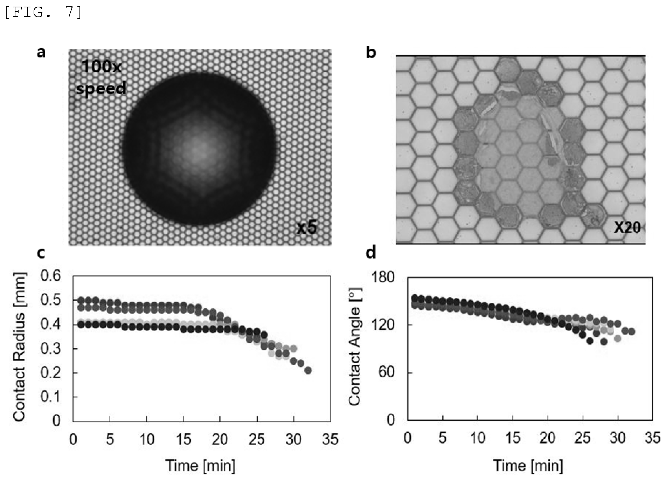

In addition, as shown in FIG. 7, the porous polymer structure of Example 1 exhibited a contact area of 1.2 to 1.6 mm and a contact angle of 45 to 10° until the solution was completely evaporated, showing a larger contact area and a lower contact angle compared to Comparative Example 2, and the solution was found to evaporate without sliding.

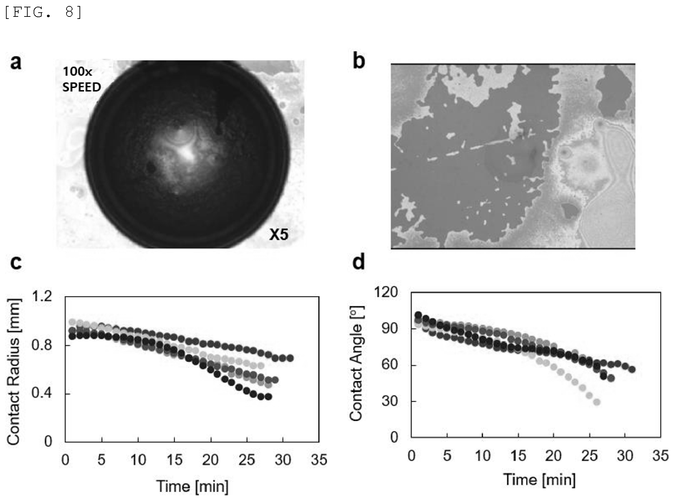

As shown in FIG. 8, the polymer structure having the slippery surface of Example 2 exhibited a contact area of 1.2 to 0.4 mm and a contact angle of 110 to 30° until the solution was completely evaporated, and solution sliding and droplet coalescence were dramatically observed while the solution was evaporated on the slippery surface.

The above-described results confirmed that the hydrophilic photo-curable polymer structure having the slippery surface according to the present invention exhibits slipperiness and droplet coalescence through polymer brush formation on the surface layer via light irradiation, which are not observed in conventional planar polymer structures or porous polymer structures.

### <Experimental Example 6> Transmittance analysis

The transmittance as a function of wavelength of the polymer structures prepared in Comparative Example 2 and Examples 1 and 2 was analyzed, and the results are shown in FIG. 10.

As shown in FIG. 10A, the polymer structure having the slippery surface of Example 2 exhibited higher transmittance over a wider wavelength range compared to the polymer structures of Comparative Example 2 and Example 1.

As shown in FIG. 10B, the polymer structure having the slippery surface of Example 2 exhibited high transparency when visually confirmed in an outdoor environment.

The above-described results confirmed that the hydrophilic photo-curable polymer structure having the slippery surface according to the present invention exhibits high transmittance over a wide wavelength range and consequently high transparency, thereby being applicable as a display surface and other uses.

### <Experimental Example 7> SEM analysis of surface after anti-icing test

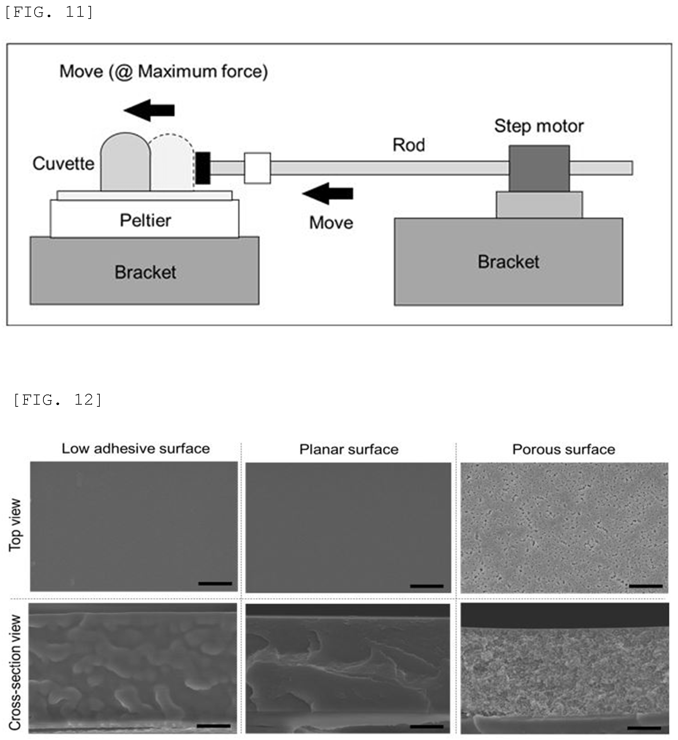

An anti-icing test was conducted using the polymer structures prepared in Comparative Example 2 and Examples 1 and 2 as shown in FIG. 11, after which the structures were analyzed by SEM, and the results are shown in FIG. 12.

As shown in FIG. 12, sliding traces of ice formed on the surface were observed on the surface of the polymer structure having the slippery surface of Example 2, which were not observed on the surfaces of the polymer structures of Comparative Example 2 and Example 1.

The above-described results confirmed that the hydrophilic photo-curable polymer structure having the slippery surface according to the present invention exhibits high slipperiness even for solids such as ice, and thus can be applied as an anti-icing material and other uses.

### <Experimental Example 8> Measurement of adhesion force and force per unit area after anti-icing test

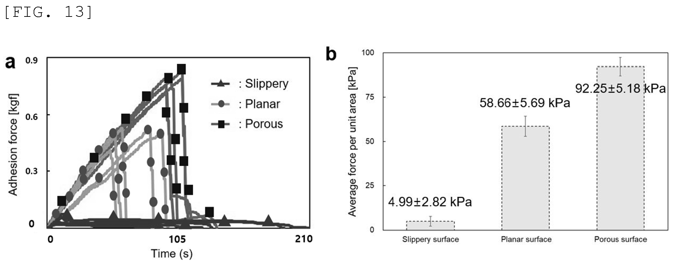

An anti-icing test was conducted using the polymer structures prepared in Comparative Example 2 and Examples 1 and 2 as shown in FIG. 11, after which the adhesion force over time and force per unit area of the structures were measured, and the results are shown in FIG. 13.

As shown in FIG. 13A, the polymer structure having the slippery surface of Example 2 exhibited very low adhesion force compared to the polymer structures of Comparative Example 2 and Example 1 due to the slipperiness for ice.

As shown in FIG. 13B, the force per unit area of the polymer structure having the slippery surface of Example 2 was 4.99 ± 2.82 kPa, which was found to be very low compared to the force per unit area of the polymer structures of Comparative Example 2 and Example 1.

The above-described results confirmed that the hydrophilic photo-curable polymer structure having the slippery surface according to the present invention exhibits high slipperiness even for solids such as ice and is easy to process with a low force per unit area. Accordingly, it was confirmed that the structure can be applied as an anti-icing material and for various other uses.

## Claims

1. A hydrophilic photo-curable polymer structure having a slippery surface, comprising:
a functionalized porous nanopore surface layer in which -OH groups are formed;
a functionalized silane water-repellent coating layer in which -OH groups are formed; and
a low-viscosity silicone lubricating coating layer having a viscosity of 5 to 15 cS,
wherein the structure is fixed by light irradiation.

2. The hydrophilic photo-curable polymer structure having the slippery surface according to claim 1, wherein the functionalized porous nanopore surface layer includes a porous polymer obtained by photo-curing a mixture of a hydrophilic photo-curable polymer and a water-soluble polymer and then immersing the resulting mixture in water to remove the water-soluble polymer.

3. The hydrophilic photo-curable polymer structure having the slippery surface according to claim 2, wherein the mixture of the hydrophilic photo-curable polymer and the water-soluble polymer is a mixture of the hydrophilic photo-curable polymer and the water-soluble polymer at a weight ratio of 1:0.5 to 1.5.

4. The hydrophilic photo-curable polymer structure having the slippery surface according to claim 2, wherein the photo-curing is UV photo-curing using light having a wavelength of 320 to 400 nm.

5. The hydrophilic photo-curable polymer structure having the slippery surface according to claim 1, wherein the functionalized porous nanopore surface layer has a pore size of 0.1 to 60 nm.

6. The hydrophilic photo-curable polymer structure having the slippery surface according to claim 1, wherein the functionalized porous nanopore surface layer has an average pore size of 11 to 18 nm.

7. The hydrophilic photo-curable polymer structure having the slippery surface according to claim 1, wherein the functionalized porous nanopore surface layer has a porosity of 40% to 60% based on 100% of the surface layer area.

8. The hydrophilic photo-curable polymer structure having the slippery surface according to claim 1, wherein the functionalized porous nanopore surface layer has a surface functionalized by light treatment.

9. The hydrophilic photo-curable polymer structure having the slippery surface according to claim 8, wherein the light treatment is UV cleaning (UV ozone) treatment.

10. The hydrophilic photo-curable polymer structure having the slippery surface according to claim 8, wherein the light treatment is performed for 5 to 20 minutes.

11. The hydrophilic photo-curable polymer structure having the slippery surface according to claim 1, wherein the functionalized silane water-repellent coating layer includes silane-based nanoparticles.

12. The hydrophilic photo-curable polymer structure having the slippery surface according to claim 11, wherein the silane-based nanoparticles are at least one selected from the group consisting of octadecyltrichloro silane (OTS), amino silane, vinyl silane, epoxy silane, methacryloxy silane, sulfide silane, ureide silane, alkyl silane, phenyl silane, oxime silane, isocyanato silane, fluoro silane, bis(trimethylsilyl)amine (hexamethyldisilazane (HMDZ)), alkyl silane, and amino silane.

13. The hydrophilic photo-curable polymer structure having the slippery surface according to claim 1, wherein the functionalized silane water-repellent coating layer has a surface functionalized by light treatment.

14. The hydrophilic photo-curable polymer structure having the slippery surface according to claim 13, wherein the light treatment is UV cleaning (UV ozone) treatment.

15. The hydrophilic photo-curable polymer structure having the slippery surface according to claim 13, wherein the light treatment is performed for 5 to 20 minutes.

16. The hydrophilic photo-curable polymer structure having the slippery surface according to claim 1, wherein the low-viscosity silicone lubricating coating layer has a surface tension of 18 to 23 mN/m.

17. The hydrophilic photo-curable polymer structure having the slippery surface according to claim 1, wherein the light irradiation is UV grafting.

18. The hydrophilic photo-curable polymer structure having the slippery surface according to claim 1, wherein the light irradiation is irradiation with ultraviolet (UV) light having a wavelength of 320 to 400 nm at a dose of 5,000 to 14,000 mJ/cm².

19. The hydrophilic photo-curable polymer structure having the slippery surface according to claim 1, wherein the polymer structure has a surface exhibiting a water contact angle of 80 to 100°, a water sliding angle of 0.4 to 1.2°, and an oil contact angle of 21 to 32°.
